## Europäisches Patentamt

## European Patent Office

## Office européen des brevets

(19)

(11) Veröffentlichungsnummer: **0 261 540**
**B1**

(12) **EUROPÄISCHE PATENTSCHRIFT**

(45) Veröffentlichungstag der Patentschrift:
05.12.90

(51) Int. Cl.⁵: **H02P 6/02**, H02P 5/40

(21) Anmeldenummer: 87113404.5

(22) Anmeldetag: 14.09.87

(54) Antriebsanordnung mit einem Antriebsmotor.

(30) Priorität: 26.09.86 DE 3632837
06.02.87 DE 3703692

(43) Veröffentlichungstag der Anmeldung:
30.03.88 Patentblatt 88/13

(45) Bekanntmachung des Hinweises auf die Patenterteilung:
05.12.90 Patentblatt 90/49

(84) Benannte Vertragsstaaten:
DE FR GB IT SE

(56) Entgegenhaltungen:
EP-A- 0 065 614
DE-A- 2 909 434

(73) Patentinhaber: Siemens Aktiengesellschaft,
Wittelsbacherplatz 2, D-8000 München 2(DE)

(72) Erfinder: Storath, Albrecht, Dipl.-Ing., Am Bergstück 10,
D-8741 Niederlauer(DE)
Erfinder: Vogt, Hartmut, Dipl.-Ing.,
Anna-Hermann-Strasse 31, D-8522 Herzogenaurach(DE)

## Beschreibung

Die Erfindung betrifft eine Antriebsanordnung mit einem Antriebsmotor mit dauermagneterregtem Rotor, dem zumindest ein Stromregler zugeordnet ist, durch den die Halbleiterschaltelemente einer dem Antriebsmotor zugeordneten elektronischen Leistungsstufe in Abhängigkeit von einem mit dem Motorläufer gekuppelten Rotorlagegeber gesteuert sind.

Eine solche Antriebsanordnung ist durch die DE-OS 31 20 559 bekannt. Bei derartigen Antriebsanordnungen ergibt sich infolge der Form der B-Feldkurve ein welliger Verlauf des Drehmomentes. Bei jedem Kommutierungsvorgang erfolgt ein Einbruch des Drehmomentes.

Der Erfindung liegt die Aufgabe zugrunde, eine Antriebsanordnung der eingangs beschriebenen Art so auszubilden, daß der Einbruch des Drehmomentes wesentlich vermindert und damit die Drehmomentwelligkeit verkleinert wird.

Die Lösung der gestellten Aufgabe gelingt nach der Erfindung dadurch, daß eine der Anzahl der Phasen des Antriebsmotors entsprechende Anzahl von Hilfswicklungen einem in seiner Pollage mit dem Rotorlagegeber übereinstimmenden, magnetisch erregten Läufer zugeordnet und die Hilfswicklungen zueinander in einem räumlichen Abstand von 360°/2pm angeordnet sind, wobei p der Polpaarzahl und m der Anzahl der Phasen des Antriebsmotors entspricht und daß die in den Hilfswicklungen induzierte Hilfsspannung nach Gleichrichtung dem Strom-Sollwert als Ergänzungs-Sollwert überlagert ist. Aufgrund der beschriebenen Anordnung der Hilfswicklungen wird in diesen eine nicht sinus-förmige Hilfsspannung induziert, die jeweils zum Kommutierungszeitpunkt ein ausgeprägtes Maximum hat. Dadurch, daß diese Hilfsspannung dem Strom-Sollwert überlagert wird, weist der Strom-Sollwert zu jedem Kommutierungszeitpunkt einen dem zu diesem Zeitpunkt auftretenden Maximum der Hilfsspannung entsprechend erhöhten Wert auf, so daß auch der Laststrom des Antriebsmotors entsprechend dem Verlauf des Strom-Sollwertes zum Kommutierungszeitpunkt hochgeregelt wird.

Eine weitere Lösung der Aufgabe besteht bei einer Antriebsanordnung, bei der mit dem Motorläufer ein Tachogenerator verbunden ist darin, daß der Tachogenerator eine in ihrer Phasenzahl mit der Phasenzahl des Antriebsmotors übereinstimmende mehrphasige Ständerwicklung aufweist und so ausgelegt ist, daß in jeder Phase der Ständerwicklung eine zumindest über einen bestimmten Winkelbereich konstant verlaufende Spannung induziert ist und die Winkelbereiche, in denen die einzelnen Phasenspannungen von der einen zu der anderen Polarität wechseln, sich untereinander zeitlich nicht überlappen, daß die einzelnen Phasenspannungen von der einen zu der anderen Polarität wechseln, sich untereinander zeitlich nicht überlappen, daß die einzelnen Phasenspannungen mittels eines Summiergliedes zu einer Hilfsspannung summiert sind, welche betragsmäßig vom Strom-Sollwert des Stromreglers subtrahiert ist. Aufgrund des beschriebenen Verlaufs der Phasenspannungen des Tachogenerators ergibt sich durch deren Summierung eine Hilfsspannung, die jeweils zum Kommutierungszeitpunkt ein ausgeprägtes Minimum hat. Dadurch, daß diese Hilfsspannung dem Betrag nach von dem Strom-Sollwert subtrahiert wird, weist der Strom-Sollwert zu jedem Kommutierungszeitpunkt einen dem zu diesem Zeitpunkt auftretenden Minimum der Hilfsspannung entsprechenden erhöhten Wert auf, so daß auch in diesem Fall der Laststrom des Antriebsmotors entsprechend dem Verlauf des Strom-Sollwertes zum Kommutierungszeitpunkt hochgeregelt wird.

Bei beiden Lösungen wird also durch den zum Kommutierungszeitpunkt höheren Laststrom der durch den Abfall der Feldkurve im Kommutierungsbereich bedingte Drehmomenteinbruch wesentlich verkleinert, so daß die Drehmomentwelligkeit abnimmt.

Dadurch, daß die Hilfswicklungen im Ständer des Antriebsmotors angeordnet und durch das Läuferfeld des Antriebsmotors induziert sind, erübrigt sich eine gesonderte Maschineneinheit zur Erzeugung der Hilfsspannung. Bei einer Antriebsanordnung mit einem dem Stromregler übergeordneten Drehzahlregler ist für die Drehzahl-Ist-Wertgabe ein mit dem Antriebsmotor gekuppelter Tachogenerator erforderlich. In diesem Falle können die Hilfswicklungen im Ständer des Tachogenerators angeordnet und durch das Läuferfeld des Tachogenerators induziert werden.

Da eine der Anzahl der Phasen des Antriebsmotors entsprechende Anzahl von Hilfswicklungen vorgesehen ist und die Hilfsspannung gleichgerichtet werden muß, ergibt sich ein entsprechend hoher Aufwand an Gleichrichterelementen. Dieser Aufwand kann dadurch vermindert werden, daß alle Hilfswicklungen in Reihe geschaltet sind. Durch diese Reihenschaltung der Hilfswicklungen ergibt sich eine einzige Hilfsspannung, deren Frequenz ein der Anzahl der Hilfswicklungen entsprechendes Vielfache der Frequenz einer einzelnen Hilfsspannung ist. Somit weist auch diese einzige Hilfsspannung zu jedem Kommutierungszeitpunkt ein Maximum auf, durch das der Strom-Sollwert dann entsprechend erhöht wird. Da nur noch eine einzige Hilfsspannung gleichgerichtet werden muß, vermindert sich der Aufwand an Gleichrichterelementen und auch an Steuerleitungen.

Die Höhe der in den Hilfswicklungen induzierten Spannung ist der Drehzahl des Antriebsmotors bzw. des mit diesem gekuppelten Tachogenerators proportional. Für die Anhebung des Strom-Sollwertes ist jedoch ein möglichst konstanter Wert erforderlich. Ein von Drehzahländerungen unabhängiger, konstanter Wert der dem Strom-Sollwert zu überlagernden Hilfsspannung wird dadurch erreicht, daß die von dem Tachogenerator gelieferte Hilfsspannung in ihrer Amplitude der Höhe der Drehzahl-Istwert-Spannung angeglichen ist und beide Spannungen den Eingängen einer Dividierstufe derart zugeführt sind, daß die Hilfsspannung durch die Drehzahl-Istwert-Spannung dividiert wird, daß ferner der Ausgang der Dividierstufe mit dem einen Eingang einer Multiplikationsstufe verbunden ist, an deren anderem Eingang der Strom-Sollwert anliegt und deren Ausgang mit einem dem Stromregler vorgeschalteten, den Soll-Istwert-Vergleich durchführenden Vergleichsglied verbunden ist.

Die Angleichung der Hilfsspannung an die Höhe der Drehzahl-Istwert-Spannung kann dadurch erfolgen, daß die Hilfswicklungen so ausgelegt sind, daß der Scheitelwert der Hilfsspannung etwa gleich der Höhe der Drehzahl-Istwert-Spannung ist oder auch dadurch, daß die Hilfsspannung über ein Normierglied der Dividierstufe zugeführt ist.

Durch das Normierglied wird der Wert der Hilfsspannung dem Wert der Drehzahl-Ist-Spannung angepaßt. Durch das Angleichen des Spannungsmaximums der Hilfsspannung an die Höhe der Drehzahl-Istwert-Spannung und die Quotientenbildung aus den beiden Spannungen ergibt sich zum Zeitpunkt des Spannungsmaximums der Hilfsspannung eine von der absoluten Größe dieser Spannungen unabhängige konstante Steuergröße. Damit wird der Strom-Sollwert im Kommutierungsbereich drehzahlunabhängig stets um den gleichen Wert erhöht.

Dadurch, daß bei einer Antriebsanordnung mit einem dreiphasigen Antriebsmotor sich der Winkelbereich, in dem die einzelnen Phasenspannungen des Tachogenerators konstant verlaufen, über 120° elektrisch erstreckt, ergibt sich ein dreieckförmiger Verlauf der Hilfsspannung, deren Amplitude der Amplitude der einzelnen Phasenspannungen entspricht. Mittels eines Kurvenformers kann die Form des Verlaufs der Hilfsspannung den jeweiligen Gegebenheiten angepaßt werden.

Ein von Drehzahländerungen unabhängiger, konstanter Wert der dem Strom-Sollwert zu überlagernden Hilfsspannung wird dadurch erreicht, daß die betragsmäßige Hilfsspannung und die aus den Tachospannungen gebildete Drehzahl-Istwertspannung den Eingängen einer Dividierstufe derart zugeführt sind, daß die betragsmäßige Hilfsspannung durch die Drehzahl-Istwertspannung dividiert wird, daß ferner der Ausgang der Dividierstufe mit dem einen Eingang einer Multiplikationsstufe verbunden ist, an deren anderem Eingang der Strom-Sollwert anliegt und deren Ausgang mit einem dem Stromregler vorgeschalteten, den Sollwert- Istwert-Vergleich durchführenden Vergleichsglied verbunden ist.

Anhand eines in der Zeichnung dargestellten Ausführungsbeispieles wird der Anmeldungsgegenstand nachfolgend näher beschrieben. Es zeigt:

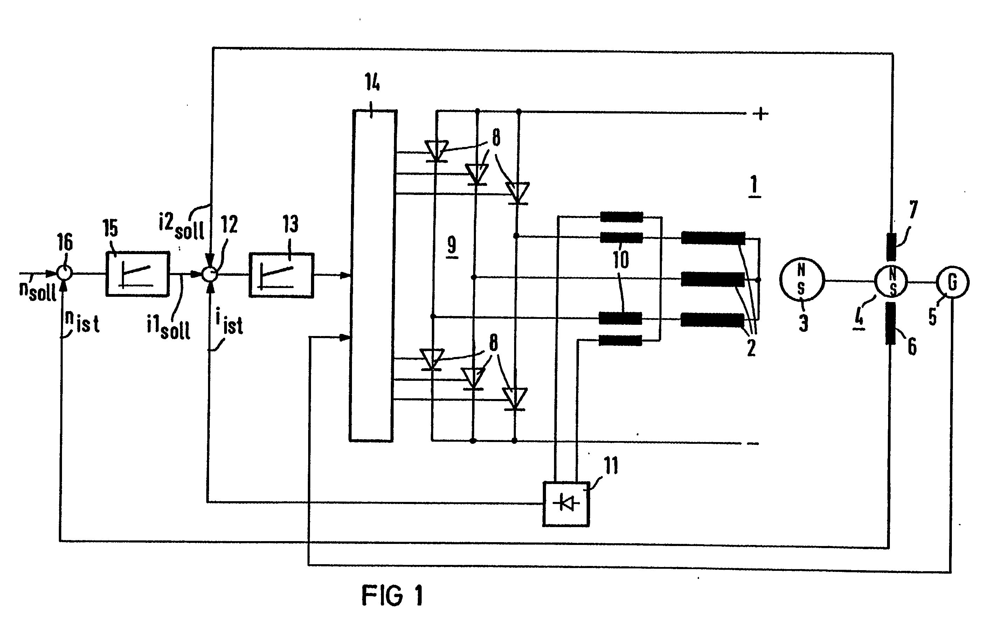

FIG 1 ein Prinzip-Schaltbild einer Antriebsanordnung,
FIG 2 ein Prinzip-Schaltbild einer Antriebsanordnung mit Quotientenbildung aus Hilfs- und Drehzahl-istwert-Spannung,
FIG 3 die Anordnung der Hilfswicklung in einem Maschinenständer,
FIG 4 in einem Liniendiagramm den Verlauf der Hilfsspannung in einer Hilfswicklung,
FIG 5 die in Fig. 4 dargestellte Hilfsspannung nach Gleichrichtung,
FIG 6 einen durch die gleichgerichtete Hilfsspannung überlagerten Strom-Sollwert für eine Phase des Antriebsmotors,

FIG 7 ein Prinzipschaltbild einer Antriebsanordnung, bei der aus der dreiphasigen Spannung eines Tachogenerators eine Hilfsspannung gebildet ist,
FIG 8 in einem Liniendiagramm den Verlauf der drei Spannungen des Tachogenerators,
FIG 9 in einem Liniendiagramm den Verlauf der durch die Summation der drei Tachospannungen gebildeten Hilfsspannung,
FIG 10 die in FIG 9 dargestellte Hilfsspannung nach Gleichrichtung und
FIG 11 den Verlauf des durch Subtraktion der gleichgerichteten Hilfsspannung gebildeten Strom-Sollwertes.

Mit 1 ist ein eine Ständerwicklung 2 und einen dauermagneterregten Läufer 3 aufweisender Antriebsmotor bezeichnet. Mit dem Läufer 3 ist ein Tachogenerator 4 und ein Polradlagegeber 5 gekuppelt. Der Tachogenerator 4 und der Polradlagegeber 5 weisen die gleiche Polzahl wie der Antriebsmotor auf. Zusätzlich zu einer die Drehzahl Istwert-Spannung liefernden Wicklung 6 ist im Ständer des Tachogenerators 4 noch eine Hilfswicklung 7 vorgesehen, die eine Hilfsspannung liefert, die dem Strom-Sollwert $i1_{Soll}$ als Ergänzungs-Sollwert $i2_{Soll}$ überlagert wird.

Die Ständerwicklung 2 liegt mit ihren drei Phasensträngen an einer aus steuerbaren Halbleiterschaltelementen 8 bestehenden elektronischen Leistungsstufe 9. Mit zwei Phasensträngen der Ständerwicklung 2 sind Stromwandler 10 in Reihe geschaltet, deren Sekundärseiten an einen Gleichrichter 11 angeschlossen sind. Das von dem Gleichrichter 11 gelieferte Gleichspannungssignal stellt den Strom-Istwert $i_{Ist}$ dar und wird einem Vergleichsglied 12 zugeführt. Das Vergleichsglied 12 erhält ferner einen von einem dem Stromregler 13 des Antriebsmotors überlagerten Drehzahlregler 15 gelieferten Strom-Sollwert $i1_{Soll}$ sowie einen Ergänzungs-Sollwert $i2_{Soll}$ zugeführt. Von dem Drehzahlregler 15 wird der Strom-Sollwert aufgrund eines in einem weiteren Vergleichsglied 16 durchgeführten Vergleiches eines vorgegebenen Drehzahl-Sollwertes $n_{Soll}$ und des vom Tachogenerator 4 gelieferten Drehzahl-Istwertes $n_{Ist}$ gebildet.

Das von dem Vergleichsglied 12 gebildete Differenzsignal liegt am Eingang eines Stromreglers 13, dessen Ausgang mit einem Eingang eines Auswahlsteuergliedes 14 verbunden ist. Mit einem weiteren Eingang des Auswahlsteuergliedes 14 ist der Ausgang des Polradlagegebers verbunden. An die Ausgänge des Auswahlsteuergliedes 14 sind die Steuerelektroden der steuerbaren Halbleiterschaltelemente 8 angeschlossen. Durch das Auswahlsteuerglied 14 wird das von dem Stromregler 13 gelieferte Steuersignal in Abhängigkeit von dem Steuersignal des Polradlagegebers 5 an die Steuerelektrode derjenigen Halbleiterschaltelemente geschaltet, die entsprechend der Stellung des Läufers 3 des Antriebsmotors 1 Strom führen müssen.

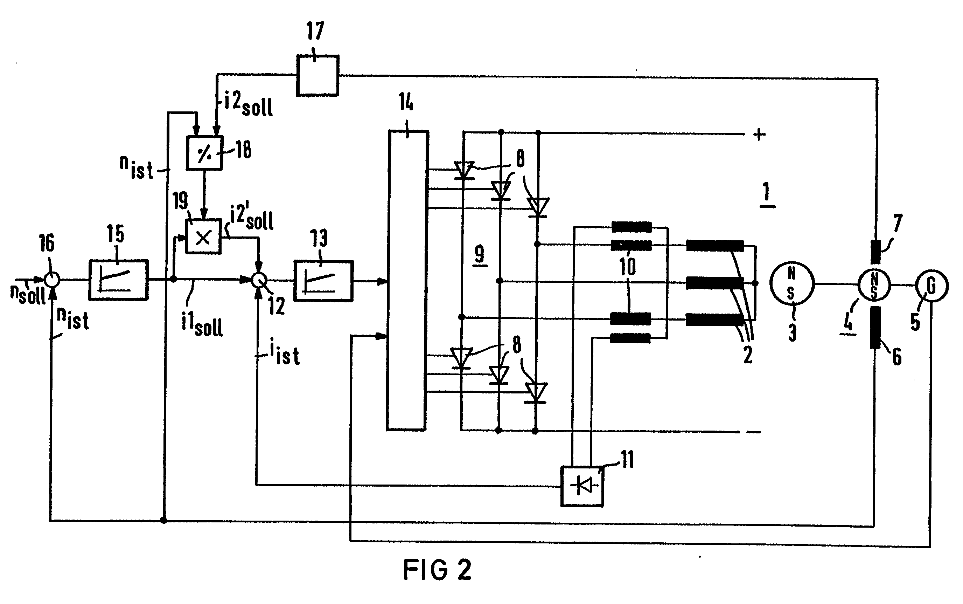

Bei dem in FIG 2 dargestellten Schaltbild ist die Antriebsanordnung durch ein Normierglied 17, eine Dividierstufe 18 und eine Multiplikationsstufe 19 ergänzt. Hierbei ist die von der Hilfswicklung 7 gelieferte Hilfsspannung an den Eingang der Normierstufe 17 gelegt, deren Ausgang mit dem einen Eingang der Dividierstufe 18 verbunden ist. Dieser Eingang der Dividierstufe 18 erhält somit den durch die Normierstufe 17 entsprechend angepaßten Ergänzungs-Sollwert $i2_{Soll}$. Am anderen Eingang der Dividierstufe 18 liegt der Drehzahl Istwert $n_{Ist}$ an. Der Ausgang der Dividierstufe 18 ist an einen Eingang der Multiplikationsstufe 19 angeschlossen. An einem weiteren Eingang dieser Multiplikationsstufe 19 liegt der von dem Drehzahlregler 15 gelieferte Strom-Sollwert $i1_{Soll}$ an. Der am Ausgang der Multiplikationsstufe 19 erscheinende korrigierte Ergänzungs-Sollwert $i2'_{Soll}$ wird zusammen mit dem vom Drehzahlregler 15 gelieferten Strom-Sollwert $i1_{Soll}$ wiederum dem Vergleichsglied 12 zugeführt. Das vom Vergleichsglied 12 gelieferte Differenzsignal bildet wiederum das Eingangssignal für den Stromregler 13.

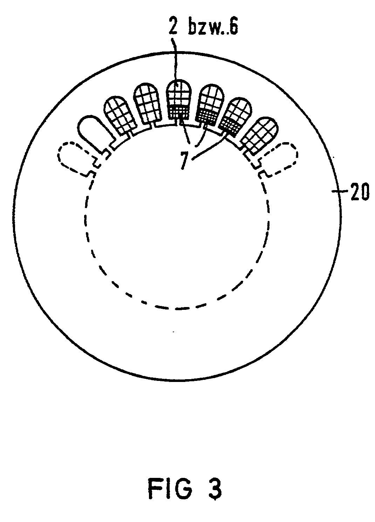

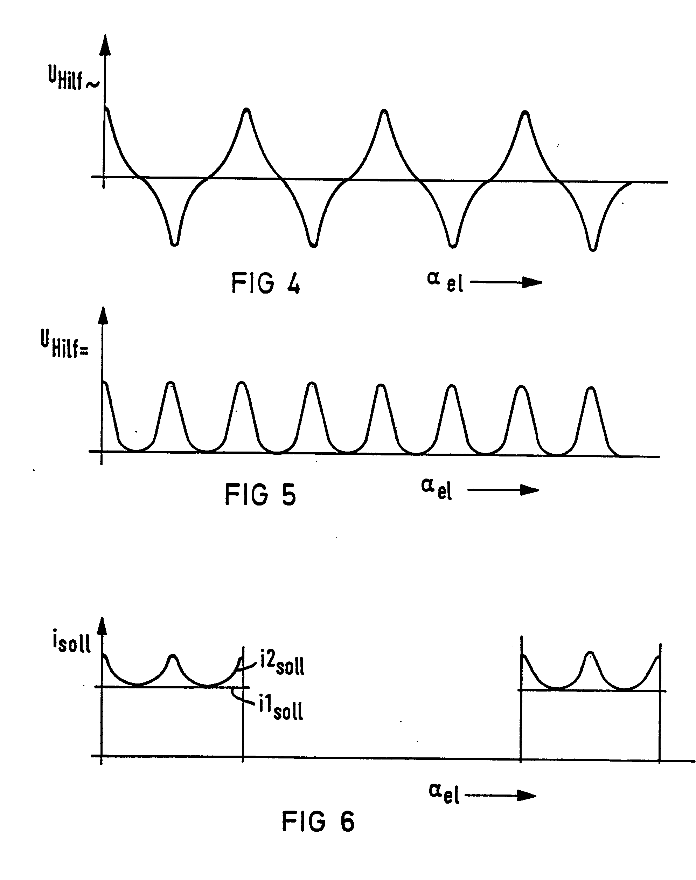

In der FIG 3 ist die Anordnung der Hilfswicklung 7 in den Nuten eines Maschinenständers 20 dargestellt. Der Maschinenständer 20 kann der Ständer des Antriebsmotors 1 oder der Ständer des Tachogenerators 4 sein. Die Hilfswicklung 7 ist zusätzlich zu der Ständerwicklung der betreffenden Maschine in den Ständernuten angeordnet. Durch den magnetisch erregten Läufer der betreffenden Maschine wird in den einzelnen Hilfswicklungen 7 eine Spannung erzeugt, deren Verlauf in FIG 4 dargestellt ist. Nach Gleichrichtung dieser Hilfsspannung ergibt sich der in FIG 5 skizzierte Verlauf. Durch die Überlagerung der gleichgerichteten Hilfsspannung mit dem Strom-Sollwert ergibt sich für den Strom-Sollwert der in FIG 6 in einphasiger Darstellung gezeigte Verlauf. Jeweils zum Zeitpunkt der Kommutierung wird der Strom-Sollwert durch die überlagerte Hilfsspannung erhöht, so daß dann auch der Laststrom über den Stromregler entsprechend hochgeregelt wird.

Durch die der Phasenzahl des Antriebsmotors entsprechende Anzahl der Hilfswicklungen 7 und deren von der Pol- und Phasenzahl des Antriebsmotors abhängige räumliche Anordnung ist das zeitlich richtige Auftreten des Maximums der in den Hilfswicklungen 7 induzierten Hilfsspannungen zu allen Kommutierungszeitpunkten gewährleistet. Somit wird der Strom-Sollwert auch durch die bloße Überlagerung der Hilfsspannung oder der mit dieser phasengleichen Quotientengröße zum richtigen Zeitpunkt, d.h. also bei jedem Kommutierungsvorgang entsprechend verändert.

Die Antriebsanordnung nach FIG 3 ist für den Betrieb mit konstanter Drehzahl geeignet. Die Hilfswicklung 7 kann so ausgelegt werden, daß die bei Betrieb mit Nenndrehzahl in den Hilfswicklungen 7 induzierte Hilfsspannung einen Wert aufweist, der für eine zum Ausgleich des Drehmomenteinbruches notwendige Stromerhöhung im Kommutierungsbereich ausreicht.

Die Größe des Drehmomenteinbruches ist, vom Trägheitsverhalten der rotiertenden Massen abgesehen, bei allen Drehzahlen etwa gleich groß. Die in den Hilfswicklungen 7 induzierte Hilfsspannung steigt dagegen proportional zur Drehzahl an. Um auch bei einer Antriebsanordnung mit veränderlicher Drehzahl über den vollen Drehzahlbereich einen ausreichenden Ausgleich des Drehmomenteinbruches zu gewährleisten, wird durch Quotientenbildung aus der Hilfsspannung und der Drehzahl-Istwert-Spannung ein von Drehzahländerungen unabhängiger konstanter Ergänzungs-Sollwert $i2'_{Soll}$ für die Überlagerung mit dem Strom-Sollwert $i1_{Soll}$ gebildet.

Da sich sowohl die Hilfsspannung als auch die Drehzahl-Istwert-Spannung in gleichem Maße mit der Drehzahl ändern, erhält man durch die vorgenannte Quotientenbildung einen von der Drehzahl unabhängigen konstanten Wert zur Korrektur des Strom-Sollwertes. Da die Drehzahl-Istwert-Spannung auf ihrer jeweiligen Höhe einen konstanten Verlauf aufweist, entspricht der zeitliche Verlauf des Signals am Ausgang der Dividierstufe 18 vollkommen dem zeitlichen Verlauf der Hilfsspannung. Damit weist auch das Ausgangssignal $i2'_{Soll}$ der Multiplikationsstufe 19 lagerichtig zu jedem Kommutierungszeitpunkt seinen Maximalwert auf, durch den der Strom-Sollwert $i1_{Soll}$ entsprechend erhöht wird.

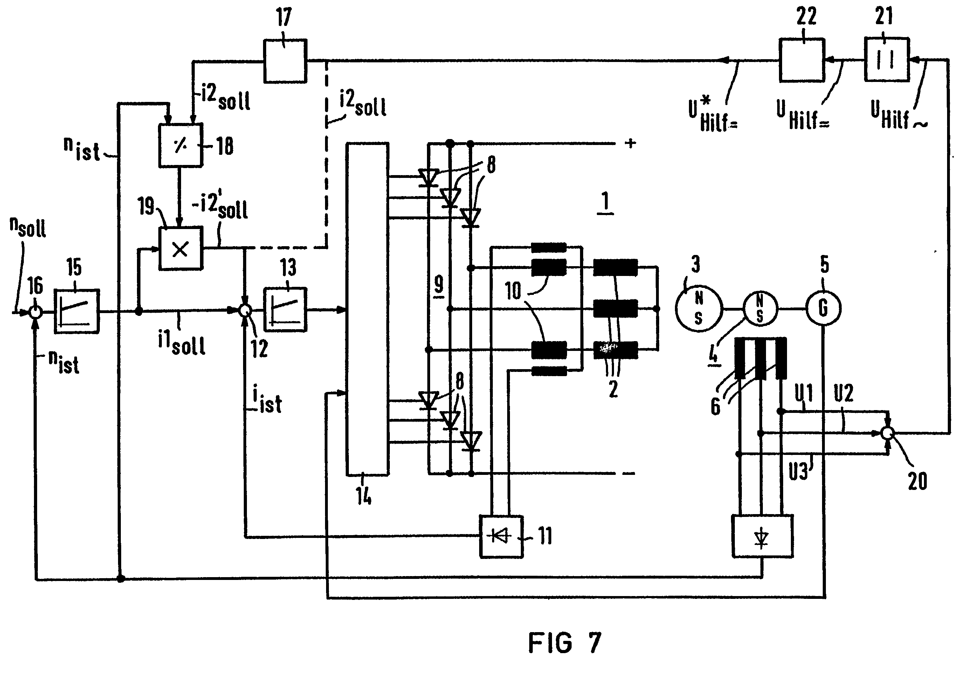

Bei dem in FIG 7 dargestellten Ausführungsbeispiel ist die Wicklung 6 des mit dem Läufer 3 gekuppelten Tachogenerators 4 dreiphasig ausgeführt.

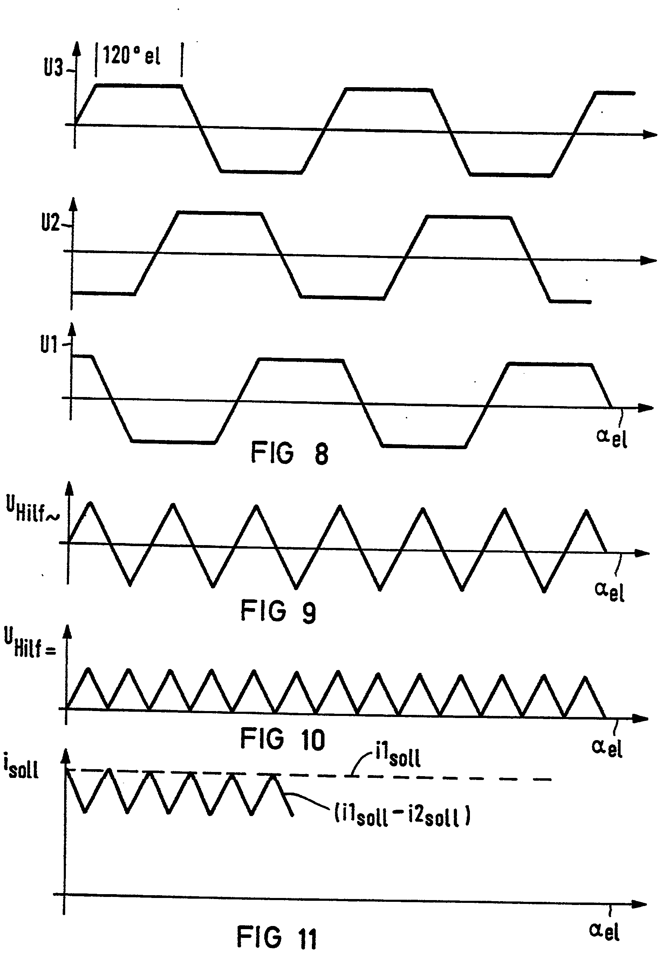

Wie die FIG 8 zeigt, haben die Phasenspannungen U1,U2,U3 des Tachogenerators 4 einen trapezförmigen Verlauf. Der konstant verlaufende Bereich dieser Phasenspannungen U1-U3 erstreckt sich über 120° elektrisch. Damit ist erreicht, daß sich die schräg verlaufenden Bereiche der einzelnen Phasenspannungen zeitlich nicht überlappen. Die Addition dieser drei Phasenspannungen U1-U3 mittels eines Summiergliedes 20 ergibt eine einphasige Hilfsspannung $U_{Hilf\sim}$ deren Verlauf in FIG 9 dargestellt ist. Von dieser Hilfsspannung $U_{Hilf\sim}$ wird mittels eines Betragsbildners 21, z.B. einer Gleichrichterdiode, der Betrag gebildet. Den Verlauf der betragsmäßigen Hilfsspannung $U_{Hilf=}$ zeigt die FIG 10. Mittels eines dem Betragsbildner 21 nachgeschalteten Kurvenformers 22 kann die Form der Hilfsspannung zur Erzielung einer optimalen Regelung verändert werden.

Die am Ausgang des Betragsbildners 21 oder des Kurvenformers 22 anstehende Hilfsspannung $U_{Hilf=}$ bzw. $U^*_{Hilf=}$ stellt den der Vergleichsstufe 12 zuzuführenden Ergänzungssollwert dar.

Arbeitet die Antriebsanordnung mit konstanter Drehzahl, kann die Hilfsspannung als Ergänzungssollwert $i2_{Soll}$ der Vergleichsstufe 12 direkt zugeführt werden, wie dies in FIG 7 gestrichelt angedeutet ist. Da der Ergänzungssollwert $i2_{Soll}$ von dem Strom-Sollwert $i1_{Soll}$ subtrahiert werden muß, ist in der Vergleichsstufe 12 ein entsprechendes Subtraktionsglied vorgesehen. Es besteht auch die Möglichkeit, den Ergänzungssollwert $i2_{Soll}$ der Vergleichsstufe 12 mit negativem Vorzeichen zuzuführen. Durch die Subtraktion des Ergänzungssollwertes $i2_{Soll}$ von dem Strom-Sollwert $i1_{Soll}$ ergibt sich ein Strom-Sollwert $i_{Soll}$, der wie die FIG 11 zeigt, ausgeprägte Maxima und Minima aufweist, wobei zu jedem Kommutierungszeitpunkt jeweils ein Maximum des Strom-Sollwertes auftritt, so daß der Laststrom zu diesem Zeitpunkt hochgeregelt wird.

Die Größe des Drehmomenteinbruches während der Kommutierungsphase ist, vom Trägheitsverhalten der rotierenden Massen abgesehen, bei allen Drehzahlen etwa gleich groß. Die in der dreiphasigen Ständerwicklung 6 des Tachogenerators 4 induzierten Spannungen steigen proportional zur Drehzahl an. Damit verläuft auch die Größe der aus diesen Spannungen gebildeten Hilfsspannung $U_{Hilf\sim}$ proporional zur Drehzahl. Um auch bei einer mit veränderlicher Drehzahl arbeitenden Antriebsanordnung über den vollen Drehzahlbereich einen ausreichenden Ausgleich des Drehmomenteinbruches zu gewährleisten, ist es notwendig, die Größe des Ergänzungssollwertes $i2_{Soll}$ konstant zu halten.

Die betragsmäßige Hilfsspannung $U_{Hilf=}$ wird daher dem Normierglied 17 zugeführt. Die nachgeschaltete Dividierstufe 18 erhält somit an ihrem einen Eingang wiederum den durch das Normierglied 17 entsprechend angepaßten Ergänzungssollwert $i2_{Soll}$ und an ihrem anderen Eingang den Drehzahl-Istwert $n_{Ist}$. Wie bei der in FIG 2 dargestellten Schaltung liefert dann die Muliplikationsstufe 19 den korrigierten Ergänzungssollwert $i2'_{Soll}$. Dabei kann der korrigierte Ergänzungssollwert $i2'_{Soll}$ durch Multiplikation mit -1 mit negativen Vorzeichen versehen werden.

Durch die Quotientenbildung aus der Hilfsspannung $U_{Hilf}$ und der Drehzahl-Istwert-Spannung erhält man wiederum einen von der Drehzahl unabhängigen Wert zur Korrektur des Strom-Sollwertes, dessen zeitlicher Verlauf vollkommen dem zeitlichen Verlauf der Hilfspannung entspricht. Damit weist auch das Ausgangssignal $i2'_{Soll}$ der Multiplikationsstufe 19 lagerichtig zu jedem Kommutierungszeitpunkt einen Minimalwert auf, der duch Subtraktion von dem Strom-Sollwert $i1_{Soll}$ zu einer Erhöhung des den Stromregler 13 zugeführten Strom-Sollwertes während der Kommutierungsphase führt.

**Patentansprüche**

1. Antriebsanordnung mit einem Antriebsmotor mit dauermagneterregtem Rotor (1), dem zumindest ein Stromregler (13) zugeordnet ist, durch den die Halbleiterschaltelemente (8) einer dem Antriebsmotor (1) zugeordneten elektronischen Leistungsstufe (9) in Abhängigkeit von einem mit dem Motorläufer (3) gekuppelten Rotorlagegeber (5) gesteuert sind, **dadurch gekennzeichnet,** daß eine der Anzahl der Phasen des Antriebsmotors (1) entsprechende Anzahl von Hilfswicklungen (7) einem in seiner Pollage mit dem Rotorlagegeber übereinstimmenden, magnetisch erregten Läufer zugeordnet und die Hilfswicklungen (7) zueinander in einem räumlichen Abstand von 360°/2pm angeordnet sind, wobei p der Polpaarzahl und m der Anzahl der Phasen des Antriebsmotors (1) entspricht und daß die in den Hilfswicklungen (7) induzierte Hilfsspannung nach Gleichrichtung dem Strom-Sollwert ($i1_{Soll}$) als Ergänzungs-Sollwert ($i2_{Soll}$) überlagert ist.

2. Antriebsanordnung mit einem Antriebsmotor mit dauermagneterregtem Rotor, dem zumindest ein Stromregler (13) zugeordnet ist, durch den die Halbleiter-Schaltelemente (8) einer dem Antriebsmotor (1) zugeordneten elektronischen Leistungsstufe (9) in Abhängigkeit von einem mit dem Motorläufer (3) gekuppelten Pollagegeber (5) gesteuert sind, welche Anordnung ferner einen mit dem Motorläufer (3) verbundenen Tachogenerator (4) aufweist, **dadurch gekennzeichnet,** daß der Tachogenerator (4) eine in ihrer Phasenzahl mit der Phasenzahl des Antriebsmotors (1) übereinstimmende, mehrphasige Ständerwicklung (6) aufweist, und so ausgelegt ist, daß in jeder Phase der Ständerwicklung (6) eine zumindest über einen bestimmten Winkelbereich konstant verlaufende Spannung (U1,U2, U3) induziert ist und die Winkelbereiche, in denen die einzelnen Phasenspannungen (U1-U3) von der einen zu der anderen Polarität wechseln, sich untereinander zeitlich nicht überlappen, daß die einzelnen Phasenspannungen (U1-U3) mittels eines Summiergliedes (20) zu einer Hilfsspannung ($U_{Hilf\sim}$) summiert sind, welche betragsmäßig vom Strom-Sollwert des Stromreglers subtrahiert ist.

3. Antriebsanordnung nach Anspruch 1, **dadurch gekennzeichnet,** daß die Hilfswicklungen (7) im Ständer des Antriebsmotors (1) angeordnet und durch das Läuferfeld des Antriebsmotors (1) in ihren Spannungen induziert sind.

4. Antriebsanordnung nach Anspruch 1, mit einem dem Stromregler (13) übergeordneten Drehzahlregler (15) und einem den Drehzahl-Istwert liefernden Tachogenerator (4), **dadurch gekennzeichnet,** daß die Hilfswicklungen (7) im Ständer des Tachogenerators (4) angeordnet und durch das Läuferfeld des Tachogenerators (4) in ihren Spannungen induziert sind.

5. Antriebsanordnung nach Anspruch 1, 3 oder 4, **dadurch gekennzeichnet,** daß alle Hilfswicklungen (7) in Reihe geschaltet sind.

6. Antriebsanordnung nach Anspruch 4, **dadurch gekennzeichnet,** daß die von dem Tachogenerator (4) gelieferte Hilfsspannung in ihrer Amplitude der Höhe der Drehzahl-Istwert-Spannung angeglichen ist und beide Spannungen den Eingängen einer Dividierstufe (18) derart zugeführt sind, daß die Hilfsspannung durch die Drehzahl-Istwert-Spannung dividiert wird, daß ferner der Ausgang der Dividierstufe (18) mit dem einen Eingang einer Multiplikationsstufe (19) verbunden ist, an deren anderem Eingang der Strom-Sollwert ($i1_{Soll}$) anliegt und deren Ausgang mit einem dem Stromregler (13) vorgeschalteten, den Soll-Istwert-Vergleich durchführenden Vergleichsglied (12) verbunden ist.

7. Antriebsanordnung nach Anspruch 6, **dadurch gekennzeichnet,** daß die Hilfswicklungen (7) so ausgelegt sind, daß der Scheitelwert der Hilfsspannung etwa gleich der Höhe der Drehzahl-Istwert-Spannung ist.

8. Antriebsanordnung nach Anspruch 6, **dadurch gekennzeichnet,** daß die Hilfsspannung über ein Normierglied (17) der Dividierstufe (18) zugeführt ist.

9. Antriebsanordnung nach Anspruch 2, mit einem dreiphasigen Antriebsmotor, **dadurch gekennzeichnet,** daß sich der Winkelbereich, in dem die einzelnen Phasenspannungen (U1-U3) des Tachogenerators (4) konstant verlaufen, über 120° elektrisch erstreckt.

10. Antriebsanordnung nach Anspruch 2 oder 9, **dadurch gekennzeichnet,** daß der Kurvenverlauf der betragsmäßigen Hilfsspannung (U $_{Hilf=}$) mittels eines Kurvenformers (22) verändert ist.

11. Antriebsanordnung nach Anspruch 2,9 oder 10, **dadurch gekennzeichnet,** daß die betragsmäßige Hilfsspannung (U $_{Hilf=}$) und die aus den Tachospannungen gebildete Drehzahl-Istwertspannung den Eingängen einer Dividierstufe (18) derart zugeführt sind, daß die betragsmäßige Hilsspannung (U $_{Hilf=}$) durch die Drehzahl-Istwertspannung dividiert wird, daß ferner der Ausgang der Dividierstufe (18) mit dem einen Eingang einer Multiplikationsstufe (19) verbunden ist, an deren anderem Eingang der Strom-Sollwert (i1 $_{Soll}$) anliegt und deren Ausgang mit einem dem Stromregler (13) vorgeschalteten, den Soll-Istwert-Vergleich durchführenden Vergleichsglied verbunden ist.

## Claims

1. Drive arrangement having a drive motor (1) with permanent magnet-excited rotor, with which there is associated at least one current controller (13), by means of which the semiconductor switching elements (8) of an electronic power stage (9), associated with the drive motor (1), are controlled in dependence upon a rotor position transmitter (5) coupled with the motor rotor (3), characterised in that a number of auxiliary windings (7), which number corresponds to the number of phases of the drive motor (1), are associated with a magnetically-excited rotor, which corresponds, in terms of its pole position, with the rotor position transmitter, and the auxiliary windings (7) are spaced one from another at intervals of 360°/2pm, where p corresponds to the pole-pair number and m corresponds to the number of phases of the drive motor (1), and in that the auxiliary voltage, which is induced in the auxiliary windings (7), is superimposed, after rectification, upon the current-reference value (i1 $_{Soll}$) as a supplementary reference value (i2 $_{Soll}$).

2. Drive arrangement having a drive motor (1) with permanent magnet-excited rotor, with which there is associated at least one current controller (13), by means of which the semiconductor switching elements (8) of an electronic power stage (9), associated with the drive motor (1), are controlled in dependence upon a pole position transmitter (5) coupled with the motor rotor (3), which arrangement further has a tachometer generator (4) connected with the motor rotor (3), characterised in that the tachometer generator (4) has a multi-phase stator winding (6), corresponding, in terms of its number of phases, to the number of phases of the drive motor (1), and is designed such that there is induced in each phase of the stator winding (6) a voltage (U1, U2, U3) which is constant at least over a certain angular range, and the angular ranges, in which the individual phase voltages (U1–U3) change from the one polarity to the other, do not overlap temporally with one another, in that the individual phase voltages (U1–U3) are added by means of a summing element (20) to an auxiliary voltage (U $_{Hilf~}$) whose amplitude is subtracted from the current-reference value of the current controller.

3. Drive arrangement according to claim 1, characterised in that the auxiliary windings (7) are arranged in the stator of the drive motor (1) and voltages are induced therein by the rotor field of the drive motor (1).

4. Drive arrangement according to claim 1 having a speed controller (15), which is superordinate to the current controller (13), and a tachometer generator (4) which supplies the actual-speed-value, characterised in that the auxiliary windings (7) are arranged in the stator of the tachometer generator (4) and voltages are induced therein by the rotor field of the tachometer generator (4).

5. Drive arrangement according to claim 1, 3 or 4, characterised in that all the auxiliary windings (7) are connected in series.

6. Drive arrangement according to claim 4, characterised in that the amplitude of the auxiliary voltage, supplied by the tachometer generator (4), is matched to the level of the actual-speed-value voltage and both voltages are fed to the inputs of a divider stage (18) in such a manner that the auxiliary voltage is divided by the actual-speed-value voltage, in that, furthermore, the output of the divider stage (18) is connected to one input of a multiplication stage (19), at the other input of which there is applied the current-reference value (i1soll) and the output of which is connected with a comparator (12), which is connected in series to the current controller (13) and carries out the reference - actual value comparison.

7. Drive arrangement according to claim 6, characterised in that the auxiliary windings (7) are designed such that the peak value of the auxiliary voltage is substantially equal to the level of the actual-speed-value voltage.

8. Drive arrangement according to claim 6, characterised in that the auxiliary voltage is fed to the divider stage (18) by way of a normalizing element (17).

9. Drive arrangement according to claim 2 having a three-phase drive motor, characterised in that the angular range, in which the individual phase voltages (U1–U3) of the tachometer generator (4) are constant, extends electrically over 120°.

10. Drive arrangement according to claim 2 or 9, characterised in that the waveform of the magnitude of the auxiliary voltage (U $_{Hilf=}$) is varied by means of a function generator (22).

11. Drive arrangement according to claim 2, 9 or 10, characterised in that the auxiliary voltage magnitude ($U_{Hilf=}$) and the actual-speed-value voltage formed from the tacho-voltages are fed to the inputs of a divider stage (18) in such a manner that the auxiliary voltage magnitude ($U_{Hilf=}$) is divided by the actual-speed-value voltage, in that, furthermore, the output of the divider stage (18) is connected to one input of a multiplication stage (19), at the other input of which there is applied the current-reference value ($i1_{Soll}$) and the output of which is connected with a comparator, which is connected in series to the current controller (13) and carries out the reference actual value comparison.

**Revendications**

1. Dispositif d'entraînement comportant un moteur d'entraînement possédant un rotor (3) excité par un aimant permanent et auquel est associé au moins un régulateur de courant (13), qui commande les éléments de commutation à semiconducteurs (8) d'un étage électronique de puissance (9) associé au moteur d'entraînement (1), en fonction d'un capteur (5) de la position du rotor (3) du moteur, accouplé à ce rotor, caractérisé par le fait qu'un nombre d'enroulements auxiliaires (7), qui correspond au nombre des phases du moteur d'entraînement (1), est associé à un rotor excité magnétiquement, dont la position des pôles coïncide avec le capteur de la position du rotor, et que les enroulements auxiliaires (7) sont disposés de manière à être séparés les uns des autres par une distance spatiale égale à 360°/2 pm, p étant le nombre des couples de pôles et m le nombre des phases du moteur d'entraînement (1), et que la tension auxiliaire induite dans les enroulements auxiliaires (7) est superposée, après redressement, à la valeur de consigne du courant ($i1_{consigne}$), en tant que valeur de consigne de complément ($i2_{consigne}$).

2. Dispositif d'entraînement comportant un moteur d'entraînement possédant un rotor (3) excité par un aimant permanent et auquel est associé au moins un régulateur de courant (13), qui commande les éléments de commutation à semiconducteurs (8) d'un étage électronique de puissance (9) associé au moteur d'entraînement (1), en fonction d'un capteur (5) de la position du rotor (3) du moteur, accouplé à ce rotor, ce dispositif comportant en outre une génératrice tachymétrique (4) reliée au rotor (3) du moteur, caractérisé par le fait que la génératrice tachymétrique (4) possède un enroulement statorique polyphasé (6), dont le nombre des phases coïncide avec le nombre des phases du moteur d'entraînement (1), et est agencée de telle sorte qu'une tension (U1, U2, U3), qui est constante au moins dans une plage angulaire déterminée, est induite dans chaque phase de l'enroulement statorique (6) et que les plages angulaires, dans lesquelles les polarités des différentes tensions de phase (U1-U3) alternent de l'une à l'autre, ne se chevauchent pas dans le temps, que les différentes tensions de phase (U1-U3) sont additionnées au moyen d'un circuit additionneur (20) pour former une tension auxiliaire ($U_{auxiliaire\sim}$), dont la valeur absolue est soustraite de la valeur de consigne du courant du régulateur de courant.

3. Dispositif d'entraînement suivant la revendication 1, caractérisé par le fait que les enroulements auxiliaires (7) sont disposés dans le stator au moteur d'entraînement (1) et que des tensions sont induites dans ces enroulements par le champ de l'induit du moteur d'entraînement (1).

4. Dispositif d'entraînem2ent suivant la revendication 1, comportant un régulateur (15) de la vitesse de rotation, qui a priorité par rapport au régulateur de courant (13), et une génératrice tachymétrique (4) délivrant la valeur réelle de la vitesse de rotation, caractérisé par le fait que les enroulements auxiliaires (7) sont disposés dans le stator de la génératrice tachymétrique (4) et que des tensions sont induites dans ces enroulements par le champ du rotor de la génératrice tachymétrique (4).

5. Dispositif d'entraînement suivant la revendication 1, 3 ou 4, caractérisé par le fait que tous les enroulements auxiliaires (7) sont branchés en série.

6. Dispositif d'entraînement suivant la revendication 4, caractérisé par le fait que l'amplitude de la tension auxiliaire délivrée par la génératrice tachymétrique (4) est réglée sur l'amplitude de la tension correspondant à la valeur réelle de la vitesse de rotation et que les deux tensions sont envoyées aux entrées d'un étage diviseur (18) de telle sorte que la tension auxiliaire est divisée par la tension correspondant à la valeur réelle de la vitesse de rotation, qu'en outre la sortie de l'étage intermédiaire (18) est reliée à une entrée d'un étage multiplicateur (19), à l'autre entrée duquel est appliquée la valeur de consigne du courant ($i1_{consigne}$) et dont la sortie est raccordée à un circuit comparateur (12) qui est branché en amont du régulateur de courant (13) et qui réalise la comparaison valeur de consigne-valeur réelle.

7. Dispositif d'entraînement suivant la revendication 6, caractérisé par le fait que les enroulements auxiliaires (7) sont agencés de telle sorte que la valeur crête de la tension auxiliaire est approximativement égale à l'amplitude de la tension correspondant à la valeur réelle de la vitesse de rotation.

8. Dispositif d'entraînement suivant la revendication 6, caractérisé par le fait que la tension auxiliaire est envoyée à l'étage diviseur (18) par l'intermédiaire d'un circuit de normalisation (17).

9. Dispositif d'entraînement suivant la revendication 2, comportant un moteur d'entraînement triühasé, caractérisé par le fait que la plage angulaire, dans laquelle les différentes tensions de phase (U1-U3) de la génératrice tachymétrique (4) sont constantes, s'étend sur 120° électriques.

10. Dispositif d'entraînement suivant la revendication 1 ou 9, caractérisé en ce que l'allure de la courbe de la tension auxiliaire en valeur absolue ($U_{auxiliaire=}$) est modifiée à l'aide d'un dispositif (22) de mise en forme de courbes.

11. Dispositif d'entraînement suivant la revendication 2, 9 ou 10, caractérisé par le fait que la valeur absolue de la tension auxiliaire ($U_{auxiliaire=}$) et la tension correspondant à la valeur réelle de la vitesse de rotation, formée à partir des tensions tachymétri- ques, sont envoyées aux entrées de l'étage diviseur (18) de telle sorte que la valeur absolue de la tension auxiliaire ($U_{auxiliaire=}$) est divisée par la tension correspondant à la valeur réelle de la vitesse de rotation, qu'en outre la sortie de l'étage intermédiaire (18) est reliée à une entrée d'un étage multiplicateur (19), à l'autre entrée duquel est appliquée la valeur de consigne du courant ($i1_{consigne}$) et dont la sortie est raccordée à un circuit comparateur (12) qui est branché en amont du régulateur de courant (13) et qui réalise la comparaison valeur de consigne-valeur réelle.

FIG 1

EP 0 261 540 B1

FIG 2

2 bzw. 6

7

20

FIG 3

FIG 4

FIG 5

FIG 6

FIG 7

EP 0 261 540 B1

FIG 8

FIG 9

FIG 10

FIG 11